# EUROPEAN PATENT SPECIFICATION

(11) **EP 2 351 685 B1**
(45) Date of publication and mention of the grant of the patent: **11.07.2012**
(21) Application number: 10150275.5
(22) Date of filing: 07.01.2010
(51) Int. Cl.: B62J 15/02

(54) **Mudguard for two-wheeled vehicles**
Schutzblech für zweirädrige Fahrzeuge
Garde-boue pour véhicules à deux roues

(43) Date of publication of application: 03.08.2011
(73) Proprietor: Polisport Plasticos, S.A., 3720-024 Carregosa (PT)
(72) Inventor: Tavares, Sérgio, Bruno Oliveira, 3700-638, Cesar, Oliveira de Azémeis (PT)
(74) Representative: Modiano, Micaela Nadia

(56) References cited:
- EP-A1- 1 795 441
- EP-A1- 2 135 803
- DE-U1-202004 010 372

## Description

### Background of the Invention

The present invention relates in general to a mudguard for two-wheeled vehicles, in particular for bicycles. In further detail, the present invention relates to a mudguard for bicycles with improved connection means thereto.

Nowadays users of bicycles prefer to ride more and more and in particular to ride mountain bicycles in good and bad weather conditions. Many users of bicycles prefer to have a mudguard in bad weather conditions and to remove the mudguard in good weather conditions. In light of the foregoing, the assembling and disassembling of the mudguard should be facilitated as much as possible for the user.

Removable mudguards which can be assembled to a plate or the like affixed to the bicycle are known in the prior art. Such plate can be affixed to the bicycle by means of a simple screw or by means of an additional mounting element, such as an expansion element which is expanded by a screw when fully inserted into a tubular part of the bicycle.

In case of a fixation of the plate by a simple screw, the plate or an extension thereof can be fixed to a part of the bicycle provided with through holes, as shown for instance in DE U 92 03 790.

In case of a fixation of the plate by an expansion element provided with a screw, as known for instance from TW 82 214 898, the expansion element can be inserted into the tubular part of the fork of the bicycle and clamped in place by the expansion caused by the screw. The same expansion causing screw is also passed through the plate and holds the same firmly attached to the tubular part of the bicycle.

Subsequently, in either case, the mudguards can be assembled to the plate by either sliding horizontally a pair of rails provided on the mudguard onto the plate, as shown in DE U 92 03 790, or by screwingly fixing the mudguard to the plate, as shown in TW 82 214 898, which is however less desirable, as each assembling / disassembling operation of the mudguard requires the user to resort to a tool.

Another mudguard which is known from EP B1 1029777 is provided with a pair of rails on a middle plane portion thereof, the middle plane portion being placed between a front part of the mudguard with a step-like and then slightly curved configuration and a rear part of the mudguard with a slightly curved configuration. In the same manner as in TW 82 214 898 a plate is also affixed to the bicycle by means of an expansion element with a screw that can be inserted into the tubular part of the bicycle fork and clamped in place. The plate is adapted to receive and hold the mudguard by pushing and sliding it horizontally into the pair of rails. The mudguard is locked in place after reaching its final position by being fully sled into the pair of rails, such locking occurring by means of an elastic latching element.

The known solution of EP B1 1029777 is however cumbersome, as the attaching and horizontal sliding must start at a certain given point under the bicycle fork which cannot be seen by the user.

Moreover, the middle plane portion must have a sufficient extension as compared to the pair of rails in order to allow the sliding of the plate into the pair of rails, particularly when the rear part of the mudguard is raised with respect to the middle plane portion thereof. Such extension, however, is not desirable from an aesthetic and functional point of view. On the other hand, if the extension of the middle plane portion of the mudguard is reduced, the solution of EP B1 1029777 brings about limitations in the design of the rear part of the mudguard, as the rear part of the mudguard must have a vertical extension which is below the plane defined by the middle plane portion in order to avoid interference of the rear part with the plate during the horizontal insertion of the plate.

Another mudguard is known from EP-A-1795441 where a rotary disc can be fastened to a coupling dock. This solution is also cumbersome.

Therefore the object of the present invention is to overcome the shortcomings explained above and to mechanically design a removable mudguard which can be assembled and disassembled in an easy and convenient way for the user, even in bad weather conditions and in darkness.

Another object of the present invention is the provision of a removable mudguard with substantially less limitations in the design of the mudguard.

Furthermore, yet another object of the present invention is the provision of a removable mudguard which should be robust and cost-efficient to produce.

### Summary of the invention

The above objects as well as further objects that will become apparent hereinafter are achieved by a mudguard as defined in claim 1.

Further advantageous aspects of the invention are set out in the dependent claims.

### Brief Description of the Drawings

The foregoing and other objects, features, and advantages of the invention, as well as presently preferred embodiments thereof, will become more apparent from a reading of the following description, in connection with the accompanying drawings in which:
Fig. 1 is a side view drawing of a bicycle front wheel with a mudguard.
Fig. 2 is a perspective view of a middle planar portion of the mudguard according to the invention with its connection means and a connection adapter above the connection means in a non-assembled state.
Fig. 3a is a perspective view of the middle planar portion of the mudguard of Fig. 2 with its connection means assembled to the connection adapter in a first position.
Figs. 3b — 3d are perspective views of the middle planar portion of the mudguard of Fig. 2 with its connection means assembled to the connection adapter in further different positions.
Fig. 4a is a perspective view of the middle planar portion of the mudguard of Fig. 2 with its connection means and with locking wings in a retracted state.
Fig. 4b is a perspective view of the middle planar portion of the mudguard of Fig. 2 with its connection means and with locking wings extended in a normal unbiased state.
Fig. 5a is a perspective view of Fig. 4a in larger scale.
Fig. 5b is a perspective view of Fig. 4b in larger scale.
Fig. 5c is a perspective view of the backside of the middle planar portion of the mudguard of Fig. 2 with its connection mechanism from the backside.
Fig. 6a is a perspective view of the top-side of the locking element.
Fig. 6b is a perspective view of the backside of the locking element.
Fig. 7a is a perspective view of the backside of the connection adapter.
Fig. 7b is a perspective view of a backside of the connection adapter, similar to Fig. 7a, but with an additional locking element and with the connection means holding the locking element omitted for the sake of clarity.
Fig. 8 is a perspective view of a cross section of the connection means of the mudguard with the locking element in the assembled state of the connection adapter.

### Detailed description of the invention

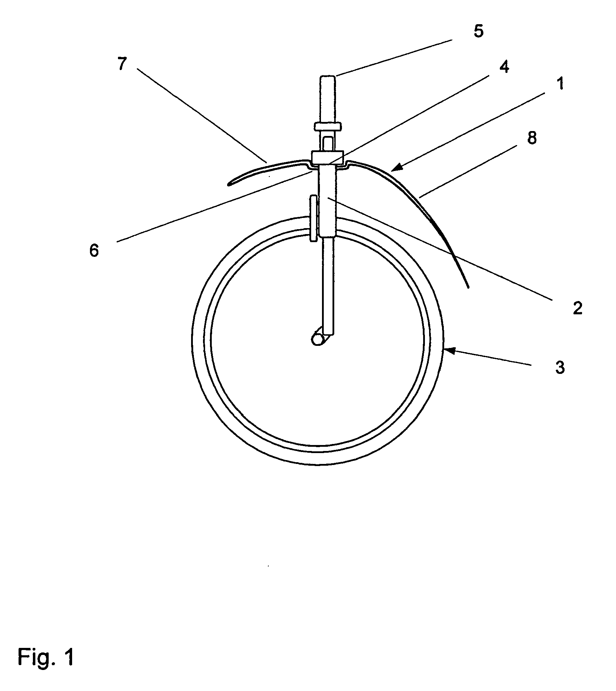

Fig. 1 is a general view showing a bicycle front part with a front wheel 3 connected to a bicycle fork 2 leading to an upper connection part 5 for a handlebar which is not shown. At the bicycle fork 2, in particular in the middle and under the bicycle fork 2, there is a fixation point 4 for mounting a mudguard 1 preventing that water, dust, mud or the like which gets stirred up by a fast turning wheel 3 reaches the driver.

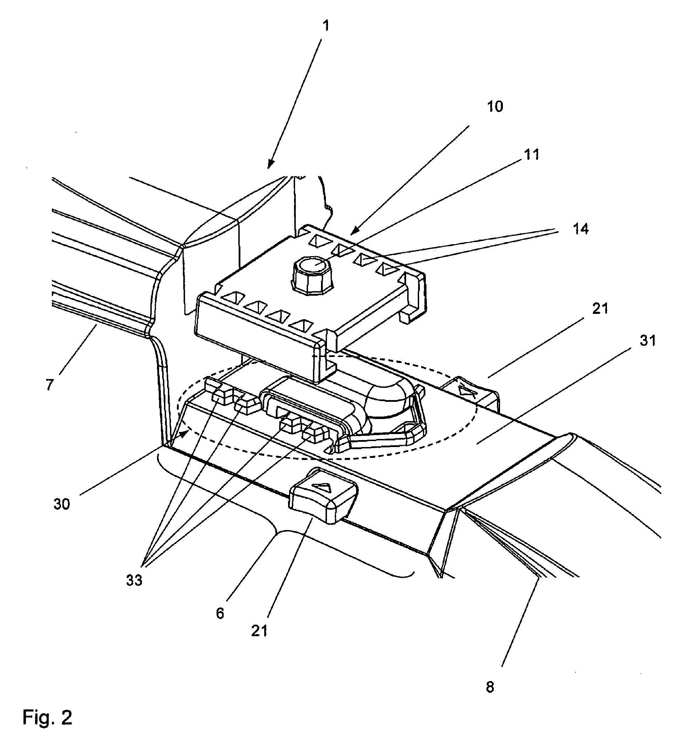

Fig. 2 shows in more detail and from a top perspective view a middle planar portion 6 between the front part 7 and the rear part 8 of the mudguard 1 with a connection means generically indicated by reference numeral 30 on the middle planar portion 6. The connection means 30 can be molded as an integral piece together with the middle planar portion 6 or with the whole mudguard 1 or it can be provided as a separate part which is thereafter permanently attached to the middle planar portion 6. Also the middle planar portion 6, the front part 7 and the rear part 8 can be molded integrally or can be molded as separate pieces which are interconnected in a known manner which is familiar to the person skilled in the art and will not be described hereinafter. Furthermore, as shown in Fig. 1 and Fig. 2, the front part 7 has, starting from the middle planar portion 6, a step-like configuration followed by a slightly curved configuration. Moreover, with continued reference to Fig.1 and Fig. 2, the rear part 8 has a slightly curved configuration which can start at a point or extend to a position which is vertically higher than the plane of the middle planar portion 6, as advantageously allowed by the present invention. Nevertheless, the rear part 8 can also extend fully below the plane of the middle planar portion 6, as known from prior art mudguards.

With continued reference to Fig. 2 as well as Figs. 4a through 7b further details of the connection means are shown. In particular, the connection means 30 comprises a connector base plate 31, two parallel rows of guiding elements 33 disposed on the connector base plate 31 in a longitudinal direction thereof, and a locking element 20 with two releasing buttons 21 and two locking wings 22 operatively connected to the releasing buttons 21. Each of the locking wings 21 extends, at least in part, over a respective row of guiding elements 33 and surrounds the covered guiding elements 33 by means of respective guiding brackets 24.

The releasing buttons 21 are adapted, in the compressed state thereof, to cause the movement of the locking wings 22 in a plane parallel to the middle planar portion 6, such as to expose the respective guiding elements 33 surrounded by the respective locking wings 21 and the guiding brackets 24.

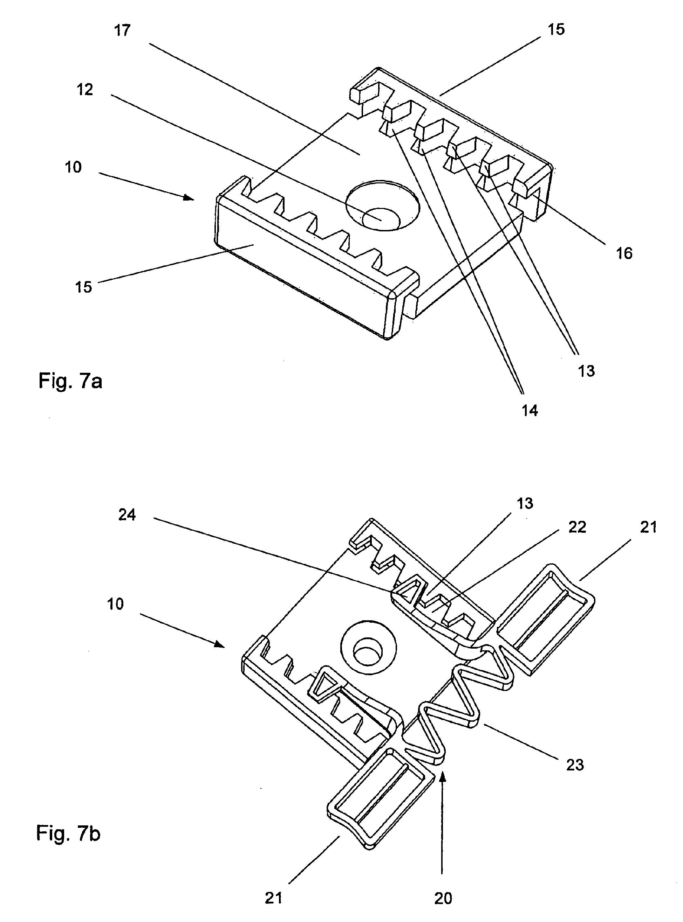

Fig. 2 shows the releasing buttons 21 in the compressed state with the releasing wings 22 retracted, such that the guiding elements 33 which are under the guiding wings 22 are exposed. Further, also in Fig. 2, a connection adapter 10 (to be described hereinafter with respect to Fig. 7a and 7b) is shown which is not connected to the connection means 30.

The connection adapter 10 is intended for permanent mounting to the bicycle fork 2. In particular, in one embodiment, the connection adapter 10 can be mounted on the bicycle fork 2 by screwing a screw (not shown) from the backside of the connection adapter 10 through a hole of a polygonal mold on joining element 11 into the bicycle fork 2. For a fixed mounting of the connection adapter 10 onto the bicycle fork 2 there may be used also other additional connection means, such as an expansion element or the like, which is described for instance in TW 82 214 898 or in DE U 297 00 562 and the teachings of which are herewith incorporated by reference. However, any other type of mounting of the connection adapter 10 to the bicycle fork 2 familiar to the person skilled in the art, including a prior art extension plate which is directly screwingly fixed to the fork 2, can be used in the present invention.

The connection adapter 10 may further include recesses 14 which facilitate the manufacturing and cleaning thereof. In addition the recess 14 can also facilitate the alignment of the connection adapter 10 with the guiding elements 33.

Advantageously, the guiding elements 33 of the connection means 30 and the corresponding recesses 14 of the connection adapter 10 allow different connection positions between the mudguard 1 and the connection adapter 10 in accordance with the overlapping relationship therebetween.

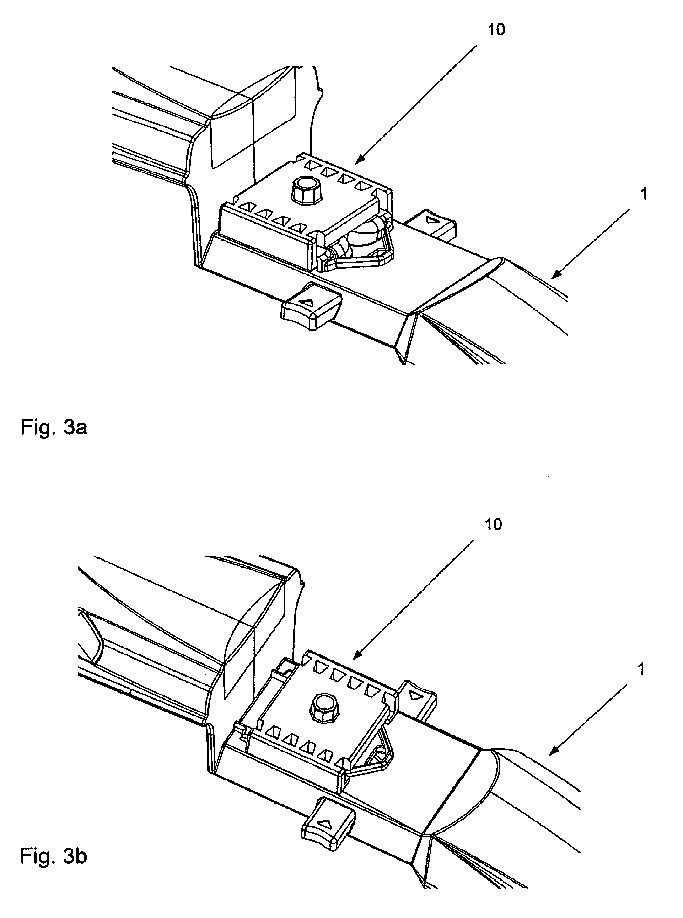

Fig. 3a shows the mudguard 1 in a state connected to the connection adapter 10 in a first possible position. This can be achieved by simply pushing the mudguard 1 vertically upwards towards the connection adapter 10, while pressing the releasing buttons 21 to retract the locking wings 22 and the guiding brackets 24 to expose the guiding elements 33 as shown in Fig. 2. Subsequently, when the guiding elements 33 of the connection means 30 become fully inserted into a respective gaps between tenons 13 (to be described hereinafter) of the connection adapter 10, the releasing buttons 21 are released and the locking wings 22 with the guiding brackets 24 can move to lock the connection adapter 10 with the connection means 30, as shown in Fig.3a.

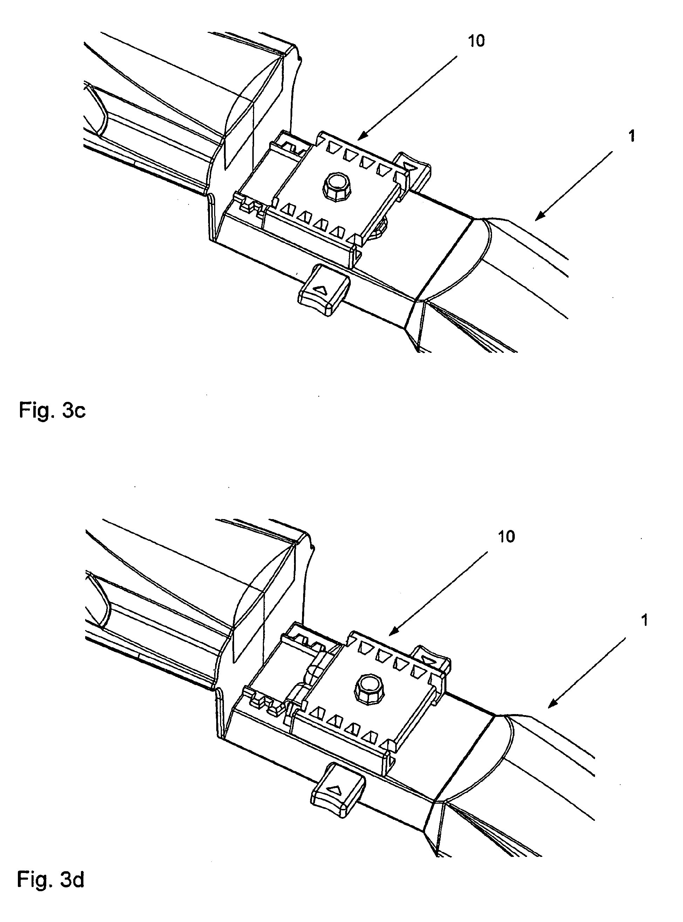

Fig. 3b - Fig. 3d show different connection positions along the longitudinal axis of the mudguard 1 and on the connector base plate 31 of the mudguard 1. In particular, Fig.3b shows a second connection position, Fig.3c shows a third connection position, Fig.3d shows a fourth connection position. At any rate, the present invention is not limited to the numbers of connection positions shown, but shall be variable in dependence on the number of guiding elements 33.

The above mentioned different connection positions render the connection system of the invention advantageously flexible with respect to different mounting varieties. The advantages of the connection system of the invention with vertical insertion of the connection means 30 of the mudguard 1 into the connection adapter 10 can hardly be achieved by other prior art removable mudguards.

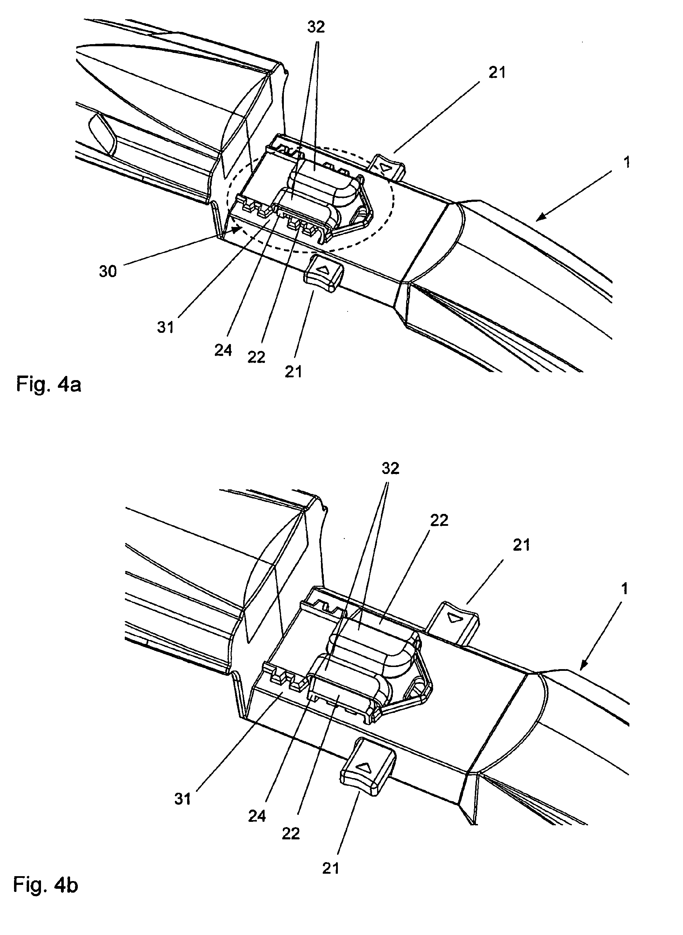

Fig. 4a shows the middle planar portion 6 between the front part 7 and the rear part 8 of the mudguard 1 with its connection means 30 comprising the connector base plate 31. In addition, the connection means 30 comprises two connector hoods 32 disposed in a longitudinal direction thereof such as to cover the locking wings 22 with the guiding brackets 24 in the retracted position thereof when the releasing buttons 21 are compressed. The connector hoods 32 provide for a reinforcement effect to the whole structure of connection means 30 and in particular to keep the locking element 20 down and within the connector means 30 when it is connected to the connection adapter 10.

Fig. 4b shows the same middle planar portion 6 of the mudguard 1 with the locking wings 22 and a part of the guiding brackets 24 thereof in an extended state after the releasing buttons 21 are returned to the unbiased state thereof. In contrast to Fig. 4a the locking wings 22 are extended beyond the connector hoods 32. Nevertheless, even in this position the connector hoods 32 provide a certain reinforcement effect to the whole structure of connection means 30 and in particular to keep the locking wings 20 down and within the connector means 3 when it is connected to the connection adapter 10.

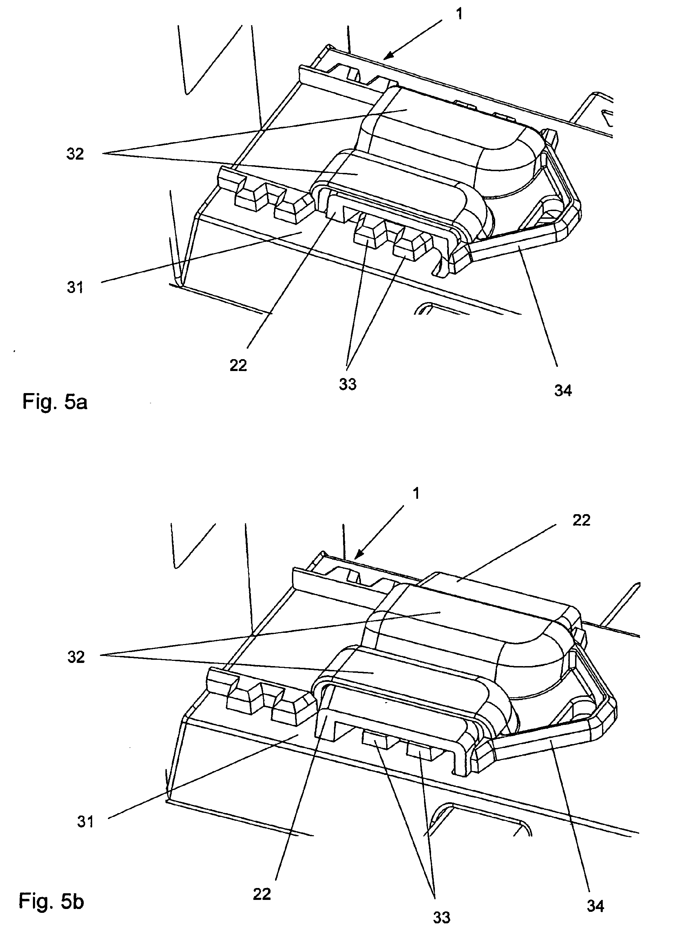

Fig. 5a and Fig. 5b show the same perspective views and states of the middle planar portion of the mudguard 1 with its connection means 30 and the locking wings 22 as already shown in Fig. 4a and Fig. 4b but in lager scale. In Fig. 5a the locking wings 22 with the guiding brackets 24 can be seen to be retracted horizontally under the connector hoods 32, such that the connection adapter 10 can be disconnected. Additionally the two rows of guiding elements 33 are shown which extend longitudinally on both sides of the connection means 30 of the mudguard 1 and a transversal guiding element 34. The transversal guiding element 34 is advantageously an additional guide facilitating the vertical insertion of the connection means 30 of the mudguard 1 into the connection adapter 10 during the assembly process. Additionally, the transversal guiding element 34 leads to a mechanically more robust and sturdy connection between the connection means 30 of the mudguard 1 and the connection adapter 10. In Fig. 5b the locking wings 22 with the guiding brackets 24 can be seen to be stuck out horizontally under the connector hoods 32, such that the connection adapter 10 would be connected and held.

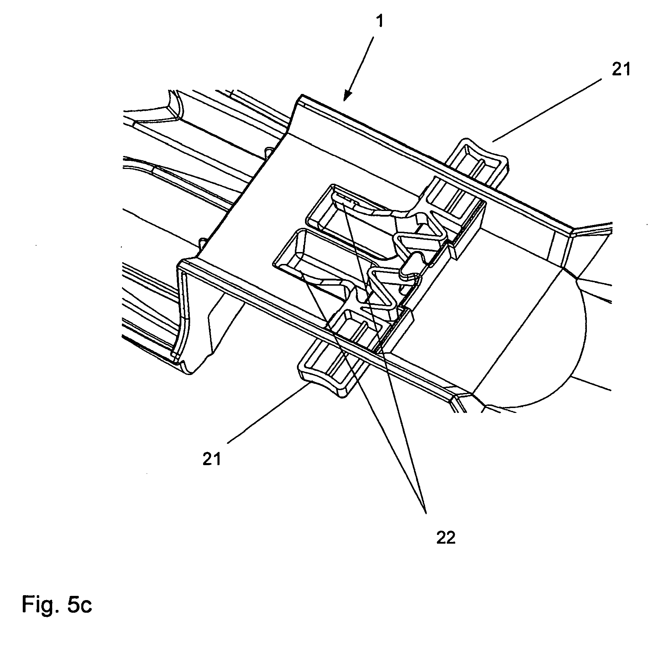

Fig. 5c shows a perspective view of the backside of the middle planar portion 6 of the mudguard 1, wherein the locking element 20 with the releasing buttons 21 is best visible in its assembled state. The releasing buttons 21 are here in the normal unbiased state, so that the locking wings 22 are extended as can be seen from the top view of Fig. 5b. If the releasing buttons 21 would be pressed or pushed in horizontally, respectively, into the connection means 30, then the locking wings 22 would be moved towards the longitudinal middle axis of the mudguard 1 and so would be moved into the connector hoods 32 as seen from the other top side view of Fig. 5a and would release a holding connection to a connection adapter 10 (which is not shown here).

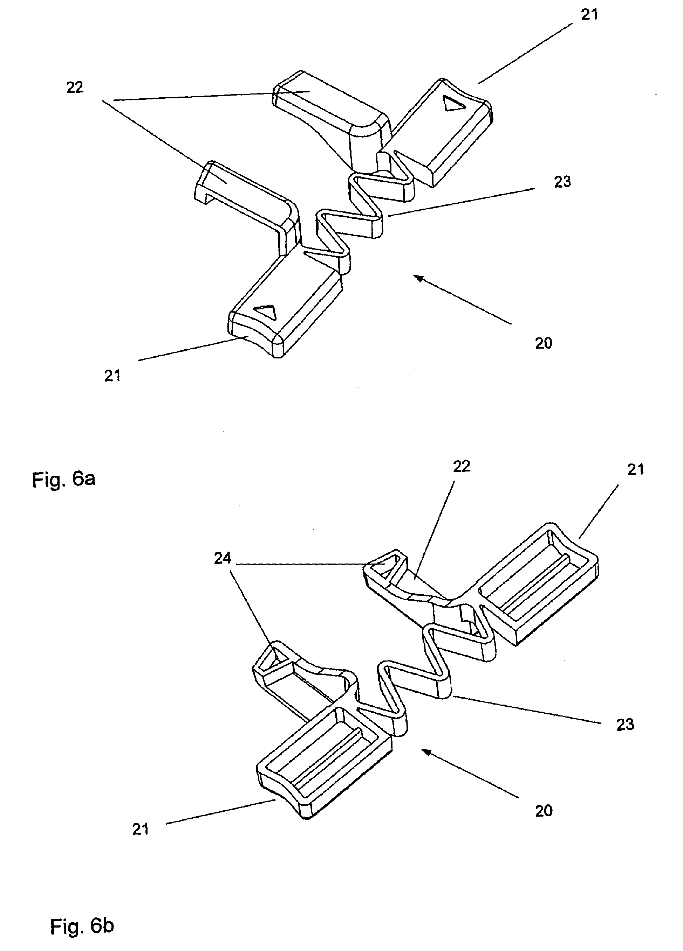

Fig. 6a shows the top-side view of the locking element 20 with the two releasing buttons 21 facing each other and a locking spring 23 connecting the releasing buttons 21. The locking spring 23 keeps the releasing buttons 21 apart and so causes a restoring force if the releasing buttons 21 are pressed by a user in the biased state. Preferably, the locking spring 23 and the releasing buttons 21 can be integrally molded from a single material. Preferably, the whole structure of the locking element 20 comprised of the locking spring 23, the releasing buttons 21, the locking wings 22, and the guiding brackets 24 (which are best visible in the backside view of Fig. 6b) can be integrally molded from a single material. The whole locking element 20 is mechanically designed to fit exactly but with enough tolerance in order not to jam into the connection means 30 of the mudguard 1. The locking element 20 can become inserted into the connection means 30 of the mudguard 1 by insertion of one of the releasing buttons 21 into one of the opposing lateral recesses of the connection means 30 as shown in Fig.5c, then pressing the locking spring 23, so that the other releasing button 21 can be inserted into the other lateral recess of the connection means 30. The invention is at any rate not intended be limited to a mold on spring 23 of the same material as the locking element 20 but can also comprise a spring consisting of another material being mold on or being inserted as separate element.

Fig. 7a shows the connection adapter 10 from a perspective backside view. The connection adapter 10 is intended to be mounted onto the bicycle fork 2 (Fig. 1) for instance by guiding a screw through an adapter mounting hole 12 onto the bicycle fork 2, in particular at the fixation point 4 (Fig. 1). A perspective top view of the connection adapter 10 with the polygonal mold on joining element 11 from its top is shown in Fig. 2 wherein the polygonal mold on joining element 11 strengthens the mechanical mounting on the bicycle fork 2. The connection adapter 10 has a substantially rectangular shape and comprises on each of its sides (in the longitudinal direction of the mudguard 1 when connected to mudguard 1) a side wall 15 with a planar form towards the exterior edges of the connection adapter 10. It should be noted in this context that in the present invention, whenever an axis or direction is indicated, such axis or direction is defined with respect to the connected state of the mudguard 1 and the connection adapter 10.

The interior part of each side wall 15 comprises a plurality of tenons 13 into which the guiding elements 33 and the guiding brackets 24 become inserted in the locked state of the mudguard 1 and the connection adapter 10.

Preferably, the tenons 13 have, at least in part, a conical shape with the guiding elements 33 and the guiding brackets 24 being formed in a manner complementary thereto. In particular, the tenons 13 have a partly conical form tapering towards the longitudinal axis of the connection adapter 10 and at the same time have a slightly conical form towards the connection means 30 of the mudguard 1 (which is not shown). The connection adapter 10 comprises, underneath the tenons 13, the recesses 14, as can be seen as well in Fig. 2. The tenons 13 can also be described having a form of teeth. The tenons 13 are designed such as to guide the guiding elements 33 inserted therein (Fig. 5a/b) of the connection means 30 of the mudguard 1 during the process of assembly between the mudguard 1 and the connection adapter 10. The side walls 15 in combination with the tenons 13, when engaged with the guiding elements 33 of the connection means 30, fix the connection between the connection means 30 of the mudguard 1 and the connection adapter 10 stably in all horizontal longitudinal, lateral and rotational directions.

The tenons 13 are designed such that they form an undercut, a channel or a clearance 16 extending along the inner side of each side wall 15. In this manner a gap is present between the tenons 13 and the base 17 of the connection adapter 10 into which clearance the locking wings 22 can slide to lock the connection means 30 against the connection adapter 10. While a certain number of tenons 13, recesses 14, and guiding elements 33 have been shown in the drawings, the person skilled in the art will readily understand that the present invention is not limited to the shown number thereof.

Fig. 7b shows the connection adapter 10 from a backside perspective view and similar to what is shown in Fig. 7a, but additionally there is shown the inserted locking element 20 with its locking wings 22 and with its guiding brackets 24, engaging with the connection adapter 10 and the tenons 13. The locking wings 22 fit under the tenons 13 and the guiding brackets 24 also fit exactly into the partly conical gaps between the tenons 13. The locking element 20 fits into the connection adapter 10 along the longitudinal axis in 4 different positions, which is also shown in Fig. 3a - Fig. 3d.

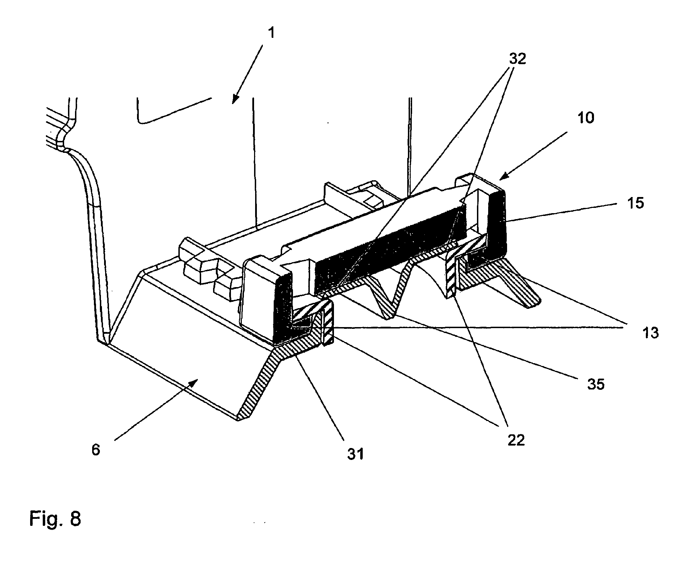

Fig. 8 shows a perspective cross section top view of the mudguard 1 with the connector base plate 31, the middle planar portion 6 (with a portion thereof omitted for the sake of clarity), locking wings 22, the guiding elements 33, the connection adapter 10, the side walls 15 and the tenons 13 in an assembled state. In Fig. 8 it can be seen how the locking wings 22 fill in the space of the undercut or channel 16 of Fig. 7a to vertically hold, together with the connector base plate 31, the tenons 13 and the guiding elements 33 in place. On the other hand, as the tenons 13 are engaged with the guiding elements 33 and/or the locking brackets 24 longitudinal and lateral movement of the connection adapter 10 with respect to the mudguard 1 is reliably prevented.

Form the assembled state of Fig. 8 it can be understood that by pulling the locking wings 22 inwards towards the longitudinal axis of the middle planar portion 6 (by pressing releasing buttons 21, which are not shown in Fig. 8) the locking wings 22 would release the side wall tenons 13 of connection adapter 10 and the mudguard 1 would be released and could be taken away.

As apparent from the foregoing, the present invention fully achieves the objects set out hereinbefore. In fact, present invention provides a mudguard with a connection means, wherein the mudguard is easily attachable and detachable to/from a bicycle in a vertical direction of the bicycle by pushing two opposite lateral releasing buttons integrated in the mudguard and then attaching or detaching the mudguard to/from a connection adapter fixedly mounted at the bicycle, in particular at the bicycle fork. The mudguard with its connection means is not be limited to be mounted at a front wheel bicycle fork; it can also be placed and mounted at the rear part of a bicycle at its frame.

Assembling of the mudguard can be done by simply moving the mudguard in a longitudinal slightly turned position in between and under the bicycle fork then turning it into a normal longitudinal position which is aligned with the bicycle, pressing then the opposite releasing buttons with two fingers and moving it then vertically upwards onto the installed connection adapter until it gets locked. By moving the mudguard upwards towards the connection adapter, the mudguard gets guided until the connection means is in its end position. Advantageously with the current invention no nut or rail has to be searched and found, what can be cumbersome in darkness. From a user point of view the mudguard has only to be brought into its final position under the bicycle fork and then to become vertically pulled up against the connection adapter.

Disassembling of the mudguard can be done by simply pushing the opposite releasing buttons with two fingers and taking the released mudguard with the same hand away.

Another advantageous aspect of the present invention is that the mudguard is designed with a short middle portion with a necessary lateral extension in order to fit under and in between the two side parts of a bicycle fork, in particular of a spring mounted front wheel bicycle fork, continuing then on both sides to a wider front part and a wider rear part of the mudguard with greater protection from water, mud or dust created by a turning bicycle wheel in the direction towards the user.

Moreover, the present invention with the vertical assembling/disassembling connection mechanism allows also the provision of a mudguard positionable in a plurality of steps and fitting exactly in between the bicycle fork.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

**List of Reference Numerals**
- 1: mudguard
- 2: fork
- 3: bicycle wheel
- 4: fixation point
- 5: connection part for handlebar
- 6: middle planar portion
- 7: front part
- 8: rear part

- 10: connection adapter
- 11: polygonal mold on joining element
- 12: adapter mounting hole
- 13: tenons
- 14: recesses
- 15: side walls
- 16: undercut, channel or clearance
- 17: base of connection adapter

- 20: locking element
- 21: releasing buttons of locking element
- 22: locking wings
- 23: locking spring
- 24: guiding brackets of locking wings

- 30: connection means of mudguard
- 31: connector base plate
- 32: connector hoods
- 33: guiding elements
- 34: transverse guide element

## Claims

1. A mudguard (1) for a two wheeled vehicle, in particular for a bicycle, comprising a front part (7) with a step like and subsequently a slightly curved configuration, a middle planar portion (6), and a rear part (8) with a slightly curved configuration, the front part (7), the middle planar portion (6) and the rear part (8) defining a longitudinal direction, the mudguard (1) further comprising a connection means (30) disposed on a connector base plate (31) of the middle planar portion (6) and a connection adapter (10) releasably connectable to the connection means (30), the connection adapter (10) being furthermore connectable to a tubular portion of the bicycle, wherein
the connection means (30) comprises two parallel rows of guiding elements (33), each row including a plurality of guiding elements (33), each row being disposed in the longitudinal direction on the connector base plate (31), and a locking element (20); and wherein
the connection adapter (10) comprises two parallel rows of tenon-like guiding elements (13), each row comprising a plurality of tenon-like guiding elements (13), each row being disposed in the longitudinal direction, when the connection adapter (10) is connected to the connection means (30) of the middle planar portion (6),
the guiding elements (33) and the tenon-like guiding elements (13) being arranged and shaped such as to guide the motion of the middle planar portion (6) towards the connection adapter (10) in a direction perpendicular to the middle planar portion (6), and
the locking element (20) being actuatable to lock the middle planar portion (6) with the connection means (30) of the connection adapter (10), when the guiding elements (33) are fully inserted in the tenon-like guiding elements (13) at the end of the perpendicular motion of the middle planar portion (6) towards the connection adapter (10).

2. The mudguard (1) according to claim 1, **characterized in that** the tenon-like guiding elements (13) of the connection adapter (10) are designed such that they form respective clearances (16) therebetween and a base (17) of the connection adapter (10), the clearances (16) extending in the longitudinal direction, when the connection adapter (10) is connected to the connection means (30) of the middle planar portion (6), the clearances (16) being sized to receive the locking element (20), when the guiding elements (33) are fully inserted in the tenon-like guiding elements (13) at the end of the perpendicular motion of the middle planar portion (6) towards the connection adapter (10) and when the locking element (20) is in a lock position, such that the connection adapter (10) is connected with the connection means (30) of the middle planar portion (6).

3. The mudguard (1) according to claim 2, **characterized in that** the locking element (20) comprises two locking wings (22) arranged in the longitudinal direction above the connector base plate (31), the locking wings (22) being actuatable to be extended in the lock position into the clearances (16) of the connection adapter (10).

4. The mudguard (1) according to claim 3, **characterized in that** each of the locking wings (22) comprises at least one respective guiding bracket (24) which is insertable in a respective tenon-like guiding elements (13) into the lock position.

5. The mudguard (1) according to any of the preceding claims, **characterized in that** the guiding elements (33) and the tenon-like guiding elements (13) are, at least in part, conically shaped or beveled.

6. The mudguard (1) according to any of the preceding claims, **characterized in that** the guiding elements (33) and the tenon-like guiding elements (13) are complementary shaped.

7. The mudguard (1) according to any of claims 4 to 6, **characterized in that** the locking wings (22) extend only in part over a respective row of guiding elements (33) and **in that** the gap between two adjacent guiding elements (33) of a row of guiding elements (33) at one end of the locking wings (22) is larger in respect to the gap between the remaining guiding elements (33) of that row of guiding elements (33), such as to allow the extending of the guiding bracket (24) between the adjacent guiding elements (33) in the lock position.

8. The mudguard (1) according to claim 7, **characterized in that** the guiding brackets (24) and the guiding elements (33) are of substantially the same shape and size and **in that**, in the extended position of the guiding bracket (24), the gaps between the guiding bracket (24) and the guiding elements (33) of a row are substantially the same in size.

9. The mudguard (1) according to any of claims 4 to 8, **characterized in that** the connection means (30) further comprises two connector hoods (32) disposed in the longitudinal direction and adapted to cover the locking wings (22) with the guiding brackets (24) in the retracted position thereof.

10. The mudguard (1) according to any of claims 3 to 9, **characterized in that** the locking element (20) further comprises two releasing buttons (21) operatively connected to the locking wings (22) and a locking spring (23) connecting the releasing buttons (21), the releasing buttons (21) being adapted, in the compressed state of the locking spring (23), to cause the movement of the locking wings (22) in a plane parallel to the middle planar portion (6), such as to expose the respective guiding elements (33) covered by the respective locking wings (21) and unlock the connection adapter (10) from the connection means (30) of the middle planar portion (6), the return force of the compressed locking spring (23) causing the locking wings (21) to return to the lock position.

11. The mudguard (1) according to claim 10, **characterized in that** the releasing buttons (21), the locking wings (22) and the locking spring (23) are integrally molded.

12. The mudguard (1) according to claim 10, **characterized in that** the releasing buttons (21), the locking wings (22), the locking spring (23) and the guiding brackets (24) are integrally molded.

13. The mudguard (1) according to any of the preceding claims, **characterized in that** the connection means (30) further comprises a transversal guiding element (34).

14. The mudguard (1) according to any of the preceding claims, **characterized in that** the connection adapter (10) further comprises an expansion element that can be inserted into the tubular part of the fork (2) of the bicycle and clamped in place by the expansion caused by the screw.

## Patentansprüche

1. Ein Schutzblech (1) für ein zweirädriges Fahrzeug, insbesondere für ein Fahrrad, das einen vorderen Teil (7) mit einer stufenartigen und anschließend einer leicht gekrümmten Konfiguration hat, einen mittleren planaren Abschnitt (6) und einen hinteren Teil (8) mit einer leicht gekrümmten Konfiguration, wobei der vordere Teil (7), der mittlere planare Abschnitt (6) und der hintere Teil (8) eine Längsrichtung bestimmen, wobei das Schutzblech (1) weiter ein Verbindungsmittel (30) umfasst, das auf einer Verbindungs-Basisplatte (31) des mittleren planaren Abschnitts (6) angeordnet ist, und einen Anschlussadapter (10) umfasst, der lösbar mit dem Verbindungsmittel (30) verbunden werden kann, wobei der Anschlussadapter (10) weiter mit einem rohrförmigen Abschnitt des Fahrrads verbunden werden kann, wobei
das Verbindungsmittel (30) zwei parallele Reihen von Führungselementen (33) umfasst und jede Reihe eine Vielzahl von Führungselementen (33) einschließt, wobei jede Reihe in Längsrichtung auf der Verbindungs-Basisplatte (31) angeordnet ist, und ein Verriegelungselement (20), und wobei
der Anschlussadapter (10) zwei parallele Reihen von zapfenähnlichen Führungselementen (13) umfasst, wobei jede Reihe eine Vielzahl zapfenähnlicher Führungselemente (13) umfasst, wobei jede Reihe in Längsrichtung angeordnet ist, wenn der Anschlussadapter (10) mit dem Verbindungsmittel (30) des mittleren planaren Abschnitts (6) verbunden ist,
die Führungselemente (33) und die zapfenähnlichen Führungselemente (13) so angeordnet und geformt sind, dass sie die Bewegung des mittleren planaren Abschnitts (6) zum Anschlussadapter (10) hin in einer Richtung senkrecht zum mittleren planaren Abschnitt (6) führen, und
das Verriegelungselement (20) betätigt werden kann, um den mittleren planaren Abschnitt (6) mit dem Verbindungsmittel (30) des Anschlussadapters (10) zu verriegeln, wenn die Führungselemente (33) am Ende der senkrechten Bewegung des mittleren planaren Abschnitts (6) zum Anschlussadapter (10) hin vollständig in die zapfenähnlichen Führungselemente (13) eingesetzt sind.

2. Das Schutzblech (1) gemäß Anspruch 1, **dadurch gekennzeichnet, dass** die zapfenähnlichen Führungselemente (13) des Anschlussadapters (10) so konstruiert sind, dass sie jeweilige Lücken (16) dazwischen und einer Basis (17) des Anschlussadapters (10) bilden, wobei die Lücken (16) sich in die Längsrichtung erstrecken, wenn der Anschlussadapter (10) mit dem Verbindungsmittel (30) des mittleren planaren Abschnitts (6) verbunden ist, wobei die Lücken (16) eine Größe haben, um das Verriegelungselement (20) aufzunehmen, wenn die Führungselemente (33) am Ende der senkrechten Bewegung des mittleren planaren Abschnitts (6) zum Anschlussadapter (10) hin vollständig in die zapfenähnlichen Führungselemente (13) eingesetzt sind und wenn das Verriegelungselement (20) in einer Verriegelungsposition ist, so dass der Anschlussadapter (10) mit dem Verbindungsmittel (30) des mittleren planaren Abschnitts (6) verbunden ist.

3. Das Schutzblech (1) gemäß Anspruch 2, **dadurch gekennzeichnet, dass** das Verriegelungselement (20) zwei Verriegelungsflügel (22) umfasst, die in Längsrichtung über der Verbindungs-Basisplatte (31) angeordnet sind, wobei die Verriegelungsflügel (22) betätigt werden können, um in der Verriegelungsposition in die Lücken (16) des Anschlussadapters (10) hinein verlängert zu werden.

4. Das Schutzblech (1) gemäß Anspruch 3, **dadurch gekennzeichnet, dass** jeder der Verriegelungsflügel (22) mindestens einen jeweiligen Führungsbeschlag (24) umfasst, der in ein jeweiliges zapfenähnliches Führungselement (13) in die Verriegelungsposition eingesetzt werden kann.

5. Das Schutzblech (1) gemäß einem beliebigen der obigen Ansprüche, **dadurch gekennzeichnet, dass** die Führungselemente (33) und die zapfenähnlichen Führungselemente (13) zumindest teilweise kegelförmig oder abgeschrägt sind.

6. Das Schutzblech (1) gemäß einem beliebigen der obigen Ansprüche, **dadurch gekennzeichnet, dass** die Führungselemente (33) und die zapfenähnlichen Führungselemente (13) komplementär geformt sind.

7. Das Schutzblech (1) gemäß einem beliebigen der Ansprüche 4 bis 6, **dadurch gekennzeichnet, dass** die Verriegelungsflügel (22) sich nur teilweise über eine jeweilige Reihe von Führungselementen (33) erstrecken, und darin, dass die Lücke zwischen zwei benachbarten Führungselementen (33) einer Reihe von Führungselementen (33) an einem Ende der Verriegelungsflügel (22) größer ist als die Lücke zwischen den restlichen Führungselementen (33) der Reihe von Führungselementen (33), um so die Verlängerung des Führungsbeschlags (24) zwischen die benachbarten Führungselemente (33) in der Verriegelungsposition zu ermöglichen.

8. Das Schutzblech (1) gemäß Anspruch 7, **dadurch gekennzeichnet, dass** die Führungsbeschläge (24) und die Führungselemente (33) im Wesentlichen dieselbe Form und Größe haben, und **dadurch**, dass in der verlängerten Position des Führungsbeschlags (24) die Lücken zwischen dem Führungsbeschlag (24) und den Führungselementen (33) einer Reihe im Wesentlichen dieselbe Größe haben.

9. Das Schutzblech (1) gemäß einem beliebigen der Ansprüche 4 bis 8, **dadurch gekennzeichnet, dass** das Verbindungsmittel (30) weiter zwei Verbindungshauben (32) umfasst, die in Längsrichtung angeordnet sind und ausgebildet sind, um die Verriegelungsflügel (22) mit den Führungsbeschlägen (24) in ihrer zurückgezogenen Position zu bedecken.

10. Das Schutzblech (1) gemäß einem beliebigen der Ansprüche 3 bis 9, **dadurch gekennzeichnet, dass** das Verriegelungselement (20) weiter zwei Auslöseknöpfe (21) umfasst, die operativ mit den Verriegelungsflügeln (22) verbunden sind, und eine Schließfeder (23), die die Auslöseknöpfe (21) verbindet, wobei die Auslöseknöpfe (21) ausgebildet sind, im komprimierten Zustand der Schließfeder (23), um die Bewegung der Verriegelungsflügel (22) auf einer Ebene parallel zum mittleren planaren Abschnitt (6) zu verursachen und so die jeweiligen Führungselemente (33) freizulegen, die von den jeweiligen Verriegelungsflügeln (21) bedeckt sind, und den Anschlussadapter (10) aus dem Verbindungsmittel (30) des mittleren planaren Abschnitts (6) zu lösen, wobei die Rückstellkraft der komprimierten Schließfeder (23) die Verriegelungsflügel (21) veranlasst, in die Verriegelungsposition zurückzukehren.

11. Das Schutzblech (1) gemäß Anspruch 10, **dadurch gekennzeichnet, dass** die Auslöseknöpfe (21), die Verriegelungsflügel (22) und die Schließfeder (23) integral geformt sind.

12. Das Schutzblech (1) gemäß Anspruch 10, **dadurch gekennzeichnet, dass** die Auslöseknöpfe (21), die Verriegelungsflügel (22), die Schließfeder (23) und der Führungsbeschlag (24) integral geformt sind.

13. Das Schutzblech (1) gemäß einem beliebigen der obigen Ansprüche, **dadurch gekennzeichnet, dass** das Verbindungsmittel (30) weiter ein transversales Führungselement (34) umfasst.

14. Das Schutzblech (1) gemäß einem beliebigen der obigen Ansprüche, **dadurch gekennzeichnet, dass** der Anschlussadapter (10) weiter ein Verlängerungselement umfasst, das in den rohrförmigen Teil der Gabel (2) des Fahrrads eingesetzt und durch die Verlängerung, die durch die Schraube verursacht wird, an Ort und Stelle geklemmt werden kann.

## Revendications

1. Garde-boue (1) pour véhicules à deux roues, en particulier pour une bicyclette, comprenant une partie avant (7), à configuration en gradin et, subséquemment, une configuration légèrement incurvée, une partie médiane (6) plane, et une partie arrière (8) à configuration légèrement incurvée, la partie avant (7), la partie médiane (6) plane et la partie arrière (8) définissant une direction longitudinale, le garde-boue (1) comprenant en outre des moyens de connexion (30), disposés sur une plaque de base de connecteur (31) de la partie médiane (6) plane, et un adaptateur de connexion (10), susceptible d'être connecté de manière désolidarisable aux moyens de connexion (30), l'adaptateur de connexion (10) étant en outre susceptible d'être connecté à une partie tubulaire de la bicyclette, dans lequel
les moyens de connexion (30) comprennent deux rangées parallèles d'éléments de guidage (33), chaque rangée comprenant une pluralité d'éléments de guidage (33), chaque rangée étant disposée dans la direction longitudinale sur la plaque de base de connecteur (31), et un élément de verrouillage (20) ; et dans lequel
l'adaptateur de connexion (10) comprend deux rangées parallèles d'éléments de guidage (13) analogues à des tenons, chaque rangée comprenant une pluralité d'éléments de guidage (13) analogues à des tenons, chaque rangée étant disposée dans la direction longitudinale, lorsque l'adaptateur de connexion (10) est connecté aux moyens de connexion (30) de la partie médiane (6) plane,
les éléments de guidage (33) et les éléments de guidage (13) analogues à des tenons étant agencés et conformés de manière à guider le déplacement de la partie médiane (6) plane vers l'adaptateur de connexion (10), dans une direction perpendiculaire à la partie médiane (6) plane, et
l'élément de verrouillage (20) étant actionnable pour verrouiller la partie médiane (6) plane avec les moyens de connexion (30) de l'adaptateur de connexion (10), lorsque les éléments de guidage (33) sont complètement insérés dans les éléments de guidage (13) analogues à des tenons, à la fin du déplacement perpendiculaire de la partie médiane (6) plane vers l'adaptateur de connexion (10).

2. Garde-boue (1) selon la revendication 1, **caractérisé en ce que** les éléments de guidage (13) analogues à des tenons de l'adaptateur de connexion (10) sont conçus de manière qu'ils forment des espaces de jeu (16) respectifs entre eux et une base (17) de l'adaptateur de connexion (10), les espaces de jeu (16) s'étendant dans la direction longitudinale, lorsque l'adaptateur de connexion (10) est connecté aux moyens de connexion (30) de la partie médiane (6) plane, les espaces de jeu (16) étant dimensionnés pour recevoir l'élément de verrouillage (20), lorsque les éléments de guidage (33) sont complètement insérés dans les éléments de guidage (13) analogues à des tenons, à la fin du déplacement perpendiculaire de la partie médiane (6) plane vers l'adaptateur de connexion (10) et lorsque l'élément de verrouillage (20) est en une position de verrouillage, de manière que l'adaptateur de connexion (10) soit connecté aux moyens de connexion (30) de la partie médiane (6) plane.

3. Garde-boue (1) selon la revendication 2, **caractérisé en ce que** l'élément de verrouillage (20) comprend deux ailes de verrouillage (22), agencées dans la direction longitudinale au-dessus de la plaque de base de connecteur (31), les ailes de verrouillage (22) étant actionnables pour être étendues dans la position de verrouillage dans les espaces de jeu (16) de l'adaptateur de connexion (10).

4. Garde-boue (1) selon la revendication 3, **caractérisé en ce que** chacune des ailes de verrouillage (22) comprend au moins un support de guidage (24) respectif, susceptible d'être inséré dans des éléments de guidage (13) analogues à des tenons respectifs, à la position de verrouillage.

5. Garde-boue (1) selon l'une quelconque des revendications précédentes, **caractérisé en ce que** les éléments de guidage (33) et les éléments de guidage (13) analogues à des tenons sont, au moins en partie, de forme conique ou biseautés.

6. Garde-boue (1) selon l'une quelconque des revendications précédentes, **caractérisé en ce que** les éléments de guidage (33) et les éléments de guidage (13) analogues à des tenons sont de formes complémentaires.

7. Garde-boue (1) selon l'une quelconque des revendications 4 à 6, **caractérisé en ce que** les ailes de verrouillage (22) s'étendent seulement en partie sur une rangée respective d'éléments de guidage (33), et **en ce que** l'intervalle entre deux éléments de guidage (33) adjacents d'une rangée d'éléments de guidage (33), à une extrémité des ailes de verrouillage (22), est plus grand par l'intervalle entre les éléments de guidage (33) restants de cette rangée d'éléments de guidage (33), de manière à permettre l'extension du support de guidage (24) entre les éléments de guidage (33) adjacents, dans la position de verrouillage.

8. Garde-boue (1) selon la revendication 7, **caractérisé en ce que** les supports de guidage (24) et les éléments de guidage (33) sont de formes et de tailles sensiblement identiques, et **en ce que**, à la position étendue du support de guidage (24), les intervalles entre le support de guidage (24) et les éléments de guidage (33) d'une rangée sont sensiblement de la même taille.

9. Garde-boue (1) selon l'une quelconque des revendications 4 à 8, **caractérisé en ce que** les moyens de connexion (30) comprennent en outre deux capots de connecteur (32), disposés dans le direction longitudinale et adaptés pour couvrir les ailes de verrouillage (22) avec les supports de guidage (24), à leur position rétractée.

10. Garde-boue (1) selon l'une quelconque des revendications 3 à 9, **caractérisé en ce que** l'élément de verrouillage (20) comprend en outre deux boutons de relâchement (21), connectés fonctionnellement aux ailes de verrouillage (22), et un ressort de verrouillage (23) connectant les boutons de relâchement (21), les boutons de relâchement (21) étant adaptés, lorsque le ressort de verrouillage (23) est à l'état comprimé, pour provoquer le déplacement des ailes de verrouillage (22) dans un plan parallèle à la partie médiane (6) plane, de manière à exposer les éléments de guidage (33) respectifs, couverts par les ailes de verrouillage (22) respectives, et à déverrouiller l'adaptateur de connexion (10) vis-à-vis des moyens de connexion (30) de la partie médiane (6) plane, la force de rappel du ressort de verrouillage (23) comprimé provoquant le retour des ailes de verrouillage (22) à la position de verrouillage.

11. Garde-boue (1) selon la revendication 10, **caractérisé en ce que** les boutons de relâchement (21), les ailes de verrouillage (22), et le ressort de verrouillage (23) sont moulés d'une seule pièce.

12. Garde-boue (1) selon la revendication 10, **caractérisé en ce que** les boutons de relâchement (21), les ailes de verrouillage (22), le ressort de verrouillage (23) et les supports de guidage (24) sont moulés d'une seule pièce.

13. Garde-boue (1) selon l'une quelconque des revendications précédentes, **caractérisé en ce que** les moyens de connexion (30) comprennent en outre un élément de guidage transversal (34).

14. Garde-boue (1) selon l'une quelconque des revendications précédentes, **caractérisé en ce que** l'adaptateur de connexion (10) comprend en outre un élément d'expansion, pouvant être inséré dans la partie tubulaire de la fourche (2) de la bicyclette et serré en place par l'expansion provoquée par la vis.
